(19)

**Europäisches Patentamt**

**European Patent Office**

**Office européen des brevets**

(11)  **EP 4 716 081 A1**

(12) **EUROPEAN PATENT APPLICATION**

(43) Date of publication:
**25.03.2026 Bulletin 2026/13**

(21) Application number: **25180169.2**

(22) Date of filing: **02.06.2025**

(51) International Patent Classification (IPC):
*H02M 1/00* (2006.01)     *H02M 1/088* (2006.01)
*H02M 1/15* (2006.01)     *H02M 1/42* (2007.01)
*H02M 7/23* (2006.01)     *H02M 5/293* (2006.01)

(52) Cooperative Patent Classification (CPC):
**H02M 5/293; H02M 1/0025; H02M 1/0043;
H02M 1/088; H02M 1/15; H02M 1/4216;
H02M 1/4241; H02M 1/425; H02M 7/23**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.09.2024  CN 202411323283**

(71) Applicant: **Vertiv Corporation
Westerville, OH 43082 (US)**

(72) Inventors:
• **LI, Linde
Shenzhen, 518055 (CN)**

• **LI, Jian
Shenzhen, 518055 (CN)**
• **SHOU, Fujun
Shenzhen, 518055 (CN)**
• **MO, Zhigang
Shenzhen, 518055 (CN)**
• **CHEN, Shumei
Shenzhen, 518055 (CN)**

(74) Representative: **Harden, Henry Simon et al
Kilburn & Strode LLP
Lacon London
84 Theobalds Road
London WC1X 8NL (GB)**

(54)  **CURRENT SHARING CONTROL METHOD AND AC-DC CONVERSION SYSTEM**

(57)     A current sharing control method and an AC-DC conversion system are provided. The method is applied to a current sharing controller configured to control an operating state of an AC-DC converter comprising at least two rectification units. Each of the at least two rectification units is in a bridge topology combined with an LLC resonant tank. The method comprises: acquiring current sampling values of the at least two rectification units; determining a target phase shift angle of each of the rectification units according to the current sampling values, wherein the target phase shift angle is used to indicate a duration of an input voltage of the LLC resonant tank being in a zero-level state; controlling, according to the target phase shift angle of each of the rectification units, a control signal of a target switch in a bridge topology of each of the rectification units to perform phase shifting.

Figure 3

EP 4 716 081 A1

**Description**

**CROSS REFERENCE TO RELATED APPLICATION**

The present disclosure claims priority to Chinese Patent Application No. 202411323283.3 titled "CURRENT SHARING METHOD AND AC-DC CONVERSION SYSTEM", filed on September 20, 2024 with the China National Intellectual Property Administration (CNIPA).

**FIELD**

The present disclosure relates to the field of electric energy conversion, and specifically to a current sharing control method and an AC-DC conversion system.

**BACKGROUND**

A conventional AC-DC converter usually has a two-stage topology of PFC + DC-DC. In such topology, the front-stage PFC is used to control an input current to achieve a high-power factor and a low total harmonic distortion; and the rear-stage DC-DC converter is used to control an output voltage and current to ensure a stability of the output voltage and current under different operating conditions. The two-stage topology requires a two-stage switching device and an intermediate bus capacitor, which limits optimization of efficiency, power density, and cost to a certain extent. To make optimization on the basis of the two-stage topology, the intermediate bus capacitor is removed, and only a one-stage switching network is required, which derives a three-phase single-stage topology, which has characteristics of higher efficiency, higher power density, and the like, and has a broad application prospect in high-power power supply fields, such as power supplies for communication and charging of electric vehicles.

In high-power and low-voltage high-current application scenarios, the three-phase single-stage topology has a large current and therefore requires a switching device with higher current tolerance, and a ripple current on an output capacitor is large, which affects its efficiency, thermal performance, reliability and other indicators. Usually, multiple switching devices and multiple output capacitors are connected in parallel to realize current sharing and reduce the current flowing through each of the switching devices and the output capacitors.

In practical applications, the devices are non-ideal, and device parameters may vary due to process, production batch, etc. It is impossible to make the parameters of every component consistent. For example, an inductance value and capacitance value usually have an accuracy of 5% to 10%. An output gain of each of the rectification units is greatly affected by a device parameter of a resonant tank. A difference in gains caused by a difference in device parameters may result in a problem of non-uniform output current. This problem further limits the development of the three-phase single-stage topology in an application scenario with higher power and low voltage and high current.

**SUMMARY OF THE INVENTION**

The present disclosure provides a current sharing control method and an AC-DC conversion system to solve the technical problem of output currents of a converter being un-equalized which exists in the prior art.

In a first aspect, the present disclosure provides a current sharing control method for a converter, which is applied to a current sharing controller, wherein the current sharing controller is configured to control an operating state of an AC-DC converter, and the AC-DC converter comprises at least two rectification units, each of the at least two rectification units is a bridge topology combined with an LLC resonant tank, and the method comprises: acquiring current sampling values of the at least two rectification units; determining a target phase shift angle for each of the at least two rectification units according to the current sampling values of the at least two rectification units, wherein the target phase shift angle is used to indicate a duration of an input voltage of the LLC resonant tank being in a zero-level state; controlling, according to the target phase shift angle of each of the at least two rectification units, a control signal of a target switch in the bridge topology of each of the at least two rectification units to perform phase shifting.

According to one embodiment of the present disclosure, the current sampling value comprises at least one of: a sampling value of an input current, a sampling value of a rectified output current, a sampling value of a resonant current, a sampling value of a switch current, and a sampling value of a secondary current of a transformer.

According to one embodiment of the present disclosure, wherein determining a target phase shift angle of each of the at least two rectification units according to the current sampling values of the at least two rectification units comprises: determining a current error corresponding to each of the at least two rectification units according to the current sampling values of the at least two rectification units; inputting the current error corresponding to each of the at least two rectification units into a predefined current sharing loop, and performing an amplitude limiting process on an output of the predefined current sharing loop, so as to obtain a phase-shift-angle adjustment amount corresponding to each of the at least two rectification units; determining the target phase shift angle of each of the at least two rectification units according to the phase-shift-angle adjustment amount and a phase-shift-angle initial value corresponding to each of the at least two rectification units.

According to one embodiment of the present disclosure, wherein determining a current error corresponding to each of the at least two rectification units according to the current sampling values of the at least two rectification units comprises: comparing the current sampling values of the at least two rectification units to each other, to determine a minimum value of the current sampling values of the at least two rectification units; taking a difference value between a current sampling value of each of the at least two rectification units and the minimum value as the current error corresponding to each of the at least two rectification units.

According to one embodiment of the present disclosure, wherein determining a current error corresponding to each of the at least two rectification units according to the current sampling values of the at least two rectification units comprises: determining an average current value of the at least two rectification units according to the current sampling values of the at least two rectification units; taking a difference value between a current sampling value of each of the at least two rectification units and the average current value as the current error corresponding to each of the at least two rectification units.

According to one embodiment of the present disclosure, wherein an amplitude limiting range of the amplitude limiting process corresponding to the corresponding phase-shift-angle adjustment amount for each of the at least two rectification units is related to the phase-shift-angle initial value of each of the at least two rectification units.

According to one embodiment of the present disclosure, wherein controlling, according to the target phase shift angle of each of the at least two rectification units, a control signal of a target switch in the bridge topology of each of the at least two rectification units to perform phase shifting comprises: controlling, according to the target phase shift angle of each of the at least two rectification units, a control signal of an upper switch of each bridge arm in the bridge topology of each of the at least two rectification units to perform phase shifting to the left; or, controlling, according to the target phase shift angle of each of the at least two rectification units, a control signal of an upper switch of each bridge arm in the bridge topology of each of the at least two rectification units to perform phase shifting to the right; or, controlling, according to the target phase shift angle of each of the at least two rectification units, a control signal of a lower switch of each bridge arm in the bridge topology of each of the at least two rectification units to perform phase shifting to the left; or, controlling, according to the target phase shift angle of each of the at least two rectification units, a control signal of a lower switch of each bridge arm in the bridge topology of each of the at least two rectification units to perform phase shifting to the right.

In a second aspect, the present disclosure provides an AC-DC conversion system comprising an AC-DC converter and a current sharing controller, wherein the AC-DC converter comprises at least two rectification units, and each of the at least two rectification units is a bridge topology combined with an LLC resonant tank; and the current sharing controller is configured to control an operating state of the AC-DC converter, and is specifically configured to perform the above-mentioned method.

In a third aspect, the present disclosure further provides a computer device, wherein the computer comprises a processor and a memory connected to the processor, and the memory stores computer execution instructions, and the processor is configured to execute the computer-executable instructions stored in the memory to implement the above-mentioned method.

In a fourth aspect, the present disclosure further provides a computer readable storage medium, in which computer-executable instructions are stored, and the computer-executable instructions are used to implement the above-mentioned method when executed by a processor.

In a fifth aspect, the present disclosure further provides a computer program product comprising computer-executable instructions, and the computer-executable instructions are used to implement the above-mentioned method when executed by a processor.

The present disclosure provides a current sharing control method and an AC-DC conversion system. The method is applied to a current sharing controller, and the current sharing controller is used to control an operating state of an AC-DC converter, and the AC-DC converter comprises at least two rectification units, and each of the at least two rectification units is a bridge topology combined with an LLC resonant tank, and the method comprises: acquiring current sampling values of the at least two rectification units; determining a target phase shift angle of each of the rectification units according to the current sampling values of the at least two rectification units, the target phase shift angle being used to indicate a duration of an input voltage of the LLC resonant tank being in a zero-level state; controlling, according to the target phase shift angle of each of the rectification units, a control signal of a target switch in a bridge topology of each of the rectification units to perform phase shifting. According to the Embodiments of the present disclosure, a phase shift angle of a switch in a rectification unit can be adjusted, so that an input voltage of an LLC resonant tank is at a zero-level, thereby controlling an output current of each of the rectification units, so as to achieve an effect of current sharing for the output of multiple rectifier units.

## BRIEF DESCRIPTION OF THE DRAWINGS

The appended drawings are incorporated into the specification and form a part of the specification, which illustrate embodiments in accordance with the present disclosure and are used together with the specification to construe the principles of the present disclosure.

Figure 1 is a schematic diagram of a current after an LLC rectification bridge in an embodiment;

Figure 2 is a schematic diagram to illustrate a current ripple cancellation effect of three-phase single-stage two-phase interleaved parallel connection in an embodiment;

Figure 3 is a flow chart of a current sharing control method according to an embodiment of the present disclosure;

Figure 4 is a schematic diagram of current sampling points according to an embodiment of the present disclosure;

Figure 5 illustrates a structure of an AC-DC converter according to an embodiment of the present disclosure;

Figure 6 illustrates control signal waveforms of $\Delta\theta=0$, $\theta1=180°$ according to an embodiment of the present disclosure;

Figure 7 illustrates control signal waveforms of $\Delta\theta=50°$, $\theta1=130°$ according to an embodiment of the present disclosure;

Figure 8 illustrates a comparison for inductance values of resonant inductors differing by 5% according to an embodiment of the present disclosure;

Figure 9 illustrates a comparison for capacitance values of resonant capacitors differing by 5% according to an embodiment of the present disclosure;

Figure 10 illustrates a comparison for inductance values of excitation inductors differing by 5% according to an embodiment of the present disclosure;

Figure 11 illustrates a flow chart of a current sharing control method according to an embodiment of the present disclosure;

Figure 12 is a block diagram of a current sharing control method according to an embodiment of the present disclosure;

Figure 13 is a block diagram of a current sharing control method according to an embodiment of the present disclosure;

Figure 14 is a schematic diagram of phase shifting to the left for an upper switch according to an embodiment of the present disclosure;

Figure 15 is a schematic diagram of phase shifting to the right for an upper switch according to an embodiment of the present disclosure;

Figure 16 is a schematic diagram of phase shifting to the right for a lower switch according to an embodiment of the present disclosure;

Figure 17 is a structural schematic diagram of an AC-DC conversion system according to an embodiment of the present disclosure;

Figure 18 illustrates a hardware structure of a computer device according to an embodiment of the present disclosure.

Through the above figures, explicit embodiments of the present disclosure have been illustrated, which will be described in more details later. These figures and text descriptions are not intended to limit the scope of the idea of the present disclosure in any way, but rather to explain the concept of the present disclosure for those skilled in the art by referring to specific embodiments.

**DETAILED DESCRIPTION**

Exemplary embodiments are described in detail hereinafter, and examples thereof are illustrated in the accompanying drawings. When the following description refers to the drawings, the same numbers in different drawings refer to the same or similar elements, unless otherwise indicated. The implementations described in the following exemplary embodiments do not represent all implementations consistent with the present disclosure. On the contrary, they are merely examples of the apparatus and method consistent with aspects of the present disclosure as detailed in the appended claims.

In the description of the present disclosure, terms "first" and "second" are for descriptive purposes only and shall not be understood as indicating or implying relative importance or implicitly indicating quantities of indicated technical features. Therefore, a feature defined with "first" or "second" may comprise explicitly or implicitly one or more such feature. In the description of this specification, "plurality (multiple)" means two or more, unless otherwise expressly and specifically limited.

A conventional AC-DC converter usually has a two-stage topology of PFC+DC-DC. In such topology, the front-stage PFC is for controlling an input current to achieve a high-power factor and a low total harmonic distortion; and the rear-stage DC-DC converter is for controlling an output voltage and current to ensure a stability of the output voltage and current under different conditions. The two-stage topology requires a two-stage switching device and an intermediate bus capacitor, which limits optimization of efficiency, power density, and cost to a certain extent. Based on the optimization of the two-stage topology, the intermediate bus capacitor is removed, and only one-stage switching network is required, which derives a three-phase single-stage topology with characteristics of higher efficiency and higher power density, and the like. It has broad application prospects in high-power power supply fields, such as communication power supply and charging of electric vehicles.

In high-power and low-voltage high-current application scenarios, the three-phase single-stage topology carries a large current and therefore requires switching devices with higher current handling capability. In addition, the ripple current on an output capacitor is also large, which affects its efficiency, thermal, reliability and other indicators. Conventionally, multiple switching devices and multiple output capacitors are connected in parallel to realize current sharing and reduce the current flowing through each of the switching devices and the output capacitors. For example, the switch is configured to comprise two switches connected in parallel instead of one switch. Hence, the current flowing through each switch can be theoretically reduced by half, and a turn-on loss of the switch can be also reduced by half.

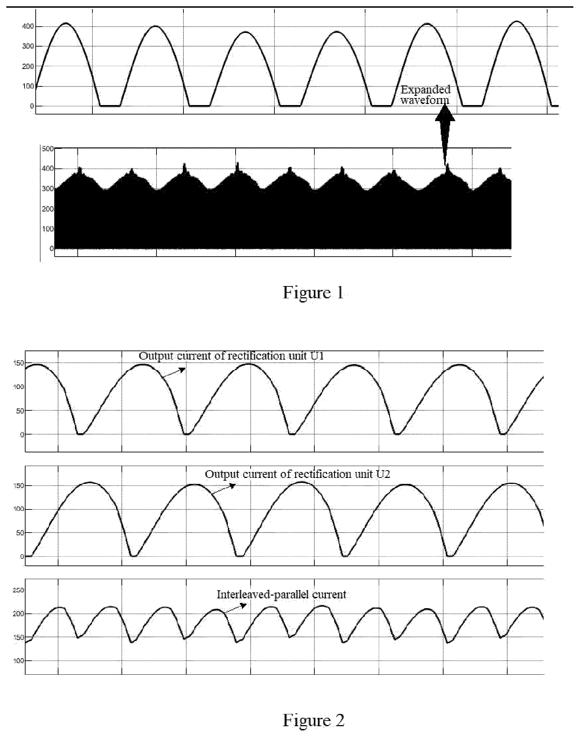

In a case where the three-phase single-stage topology has only one rectification unit, an input is 380V, 50HZ, an output is 270V, 50KW, and a capacitance of an output electrolytic capacitor is 5640uF, the current ripple after the LLC rectification bridge is quite large, with a peak-to-peak value reaching 425.9A, as shown in Figure 1. Shape of the ripple current on the output electrolytic capacitor is similar to a sine half wave. From calculation of the ripple current of the output electrolytic capacitor in a period from 0.02s to 0.18s, an effective value reaches 83.32A. A nominal ripple current of electrolytic capacitors is usually several amperes. For example, in a case where an effective value of a nominal ripple current of an electrolytic capacitor is 2A, then at least 42 electrolytic capacitors are needed to be connected in parallel, without considering de-rating. Too many electrolytic capacitors are not conducive to improving the power density of the three-phase single stage.

In a conventional method, multiple rectification units are interleaved and connected in parallel to stagger the wave timing of the switches of a rectification bridge unit by an angle, for example, by 90 degrees when two phases are interleaved, and by 120 degrees when three phases are interleaved. In this way, a ripple cancellation effect is produced in the output current of the rectification unit, so that the output current ripple of the rectification unit is reduced and thereby the current ripple on the output electrolytic capacitor is reduced. Figure 2 shows a current ripple cancellation effect of output currents of the rectification units U1 and U2 in a three-phase single-stage two-phase interleaved parallel converter.

With the two rectification units in an interleaved parallel connection, under the same condition (that is, the input is 380V, 50HZ, the output is 270V, 50KW, and the capacitance of the output electrolytic capacitor is 5640uF), the effective value of the ripple current of the output electrolytic capacitor from 0.02s to 0.18s is 27.2A, from calculation. For example, in a case where an effective value of a nominal ripple current of an electrolytic capacitor is 2A, then only 14 electrolytic capacitors are needed to be connected in parallel, without considering de-rating, which is 28 less than the 42 required in the non-interleaved parallel connection. The number of electrolytic capacitors is reduced, which is conducive to improvement of a three-phase single-stage power density.

The output gain of each of the rectification units is greatly affected by a device parameter of the resonant tank. For example, a difference in inductance of a resonant inductor, a difference in capacitance of a resonant capacitor, and a difference in inductance of an excitation inductor may affect the gain of the LLC. In a case where the rectification units have the same wave frequency, duty cycle and phase, due to the difference in gains, the output current is non-uniform. As the non-uniformity of current sharing exceeds a certain limit, heat distribution over the rectification unit is uneven. In an even severe case, a rectification unit with a large current is in an overcurrent operation. Once the withstand current for the switch is exceeded, the switch is damaged, so that reliability of the switch is affected.

In practical applications, the devices are non-ideal, and device parameters may vary due to process, batch, and other reasons. It is impossible to achieve consistency among parameters of all devices. For example, an inductance value and capacitance value usually have an accuracy of 5% to 10%. The problem of non-uniform current in the interleaved parallel three-phase single-stage topology caused by the difference in the device parameter further limits the development of the three-phase single-stage topology in an application scenario with higher power, low voltage and high current.

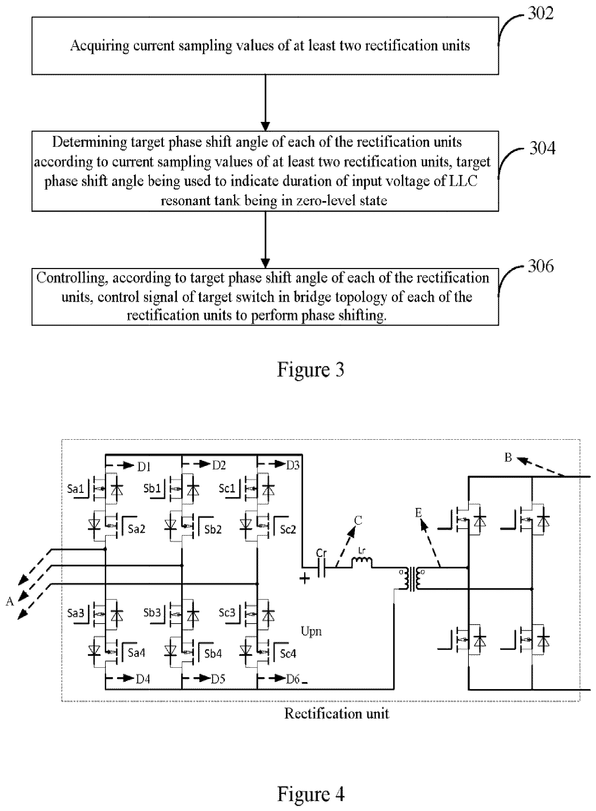

The embodiment of the present disclosure provides a current sharing control method, which is applied to a current sharing controller. The current sharing controller is used to control an operating state of an AC-DC converter. The AC-DC converter comprises at least two rectification units, and each of the at least two rectification units is a bridge topology combined with an LLC resonant tank. As shown in Figure 3, the method comprises:

Step 302: obtaining current sampling values of the at least two rectification units;

Step 304: determining a target phase shift angle of each of the rectification units according to the current sampling values of the at least two rectification units, wherein the target phase shift angle is used to indicate a duration of an input voltage of the LLC resonant tank being in a zero-level state;

Step 306: controlling the phase-shifting of the control signals for the target switches in a bridge topology of each of the rectification units according to the target phase shift angle of each of the rectification units, .

Wherein a current sampling value of a rectification unit refers to a current in a circuit of the rectification unit, and the current sampling value may be obtained by sampling either current or voltage in the circuit. The sampling points and sampling times of the current sampling values of the at least two rectification units are all required to be kept consistent, so as to determine the current magnitude of the at least two rectification units at a same time at a same position.

According to different sampling points of current sampling values, when directly sampling the current in the circuit, the current sampling values may include one or more of the following: an input current sampling value (e.g., sampling at point A in Figure 4), a rectification output current sampling value (for example, sampling at point B in Figure 4), a resonant current sampling value (for example, sampling at point C in Figure 4), a switch current sampling value (for example, sampling at points D1-D6 in Figure 4), and a transformer secondary-side current sampling value (for example, sampling at point E in Figure 4). By directly sampling currents at various points of the circuit, the current sampling values can be quickly obtained.

When the current sampling value is indirectly determined by sampling a voltage in the circuit, as shown in Figure 4, the differential voltage of a resonant capacitor may be sampled, and a current through a resonant capacitor then may be calculated through the following equation:

$$i_{cr} = C \frac{du}{dt}$$

Since the resonant capacitor and the resonant inductor are in the same current loop, the current through the resonant capacitor $i_{cr}$ is equal to a current through the resonant inductor $i_{Lr}$, i.e., $i_{Lr} = i_{cr}$. After the current through the resonant capacitor $i_{cr}$ is calculated, the current through the resonant inductor $i_{Lr}$ can be obtained.

In addition, the current sampling value of a rectification unit may be directly obtained by sampling inside the rectification unit through the above method. Alternatively, a total current of all rectification units may be sampled, and the current sampling value of the rectification unit is determined based on the total current and a sum of the current sampling values of the other rectification units.

In a rectification unit using a bridge topology combined with an LLC resonant tank, an input three-phase AC outputs voltage to the outside through a loop formed by the bridge topology and the LLC resonant tank. An output current of the rectification unit is related to a resonant current of the resonant tank, and the magnitude of the resonant current is also related to an input excitation of the resonant tank. Therefore, by controlling the magnitude of the input excitation of the resonant tank, the magnitude of the output current of the rectification unit can be controlled. Switches in the bridge topology are in an on state or off state under the control of control signals. By adjusting phases of the control signals, a state of the rectification circuit can be changed, so as to achieve the purpose of controlling the magnitude of the input excitation of the resonant tank.

After the current sampling values are obtained by sampling the currents of the at least two rectification units, the error between the output currents of the rectification units can be intuitively obtained by comparing the magnitudes of the current sampling values. The control signals of the switches can be adjusted according to the error, so as to reduce the error between the input excitations of the resonant tanks of the at least two rectification units or even eliminate the error. In a rectification unit using a bridge topology combined with an LLC resonant tank, when a bridge arm is in a fully conductive state of the upper and lower switches, an input voltage Upn of the resonant tank of the rectification unit is at a zero-level, at this time, and the effective energy transfer time of the resonant tank to a secondary side of a transformer will be reduced, thereby changing an output current of the rectification unit.

The present disclosure adjusts the phase of the control signals of the switches, changes a phase shift angle between the switches, and increases or decreases a duration in which a bridge arm is in a state where upper and lower switches are fully conducting, thereby increasing or decreasing effective energy transfer time of a resonant tank to a secondary side of a transformer, thereby increasing or decreasing an output current of the rectification unit.

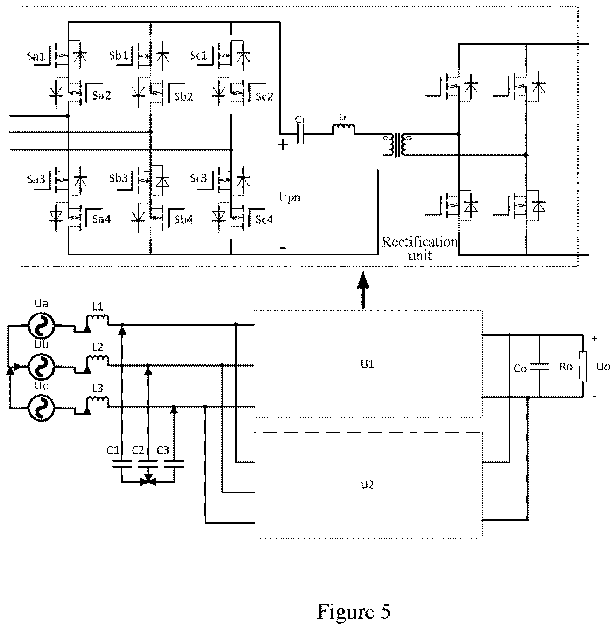

As shown in Figure 5, the method of an embodiment of the present disclosure is illustrated by taking an AC-DC converter including both rectification units U1 and U2 with the circuit structure as shown in Figure 4. A current sampling value i1 of the rectification unit U1 and a current sampling value i2 of the rectification unit U2 are obtained, and it is determined to adjust a phase shift angle(s) of the rectification unit U1 and/or the rectification unit U2 according to the magnitudes of i1 and i2, so that the phases of control signals of switch switches thereof can be changed, so that there exists a bridge arm in the bridge topology of the rectification unit U1 and/or the rectification unit U2 in a state where the switch is fully turned on, or the time length of the bridge arm in the fully turned on state is increased or shortened, and the duration of Upn being at a zero-level is changed, and the effective energy transfer time of a resonant tank to a secondary side of a transformer can be changed, thereby changing an output current of the rectification unit.

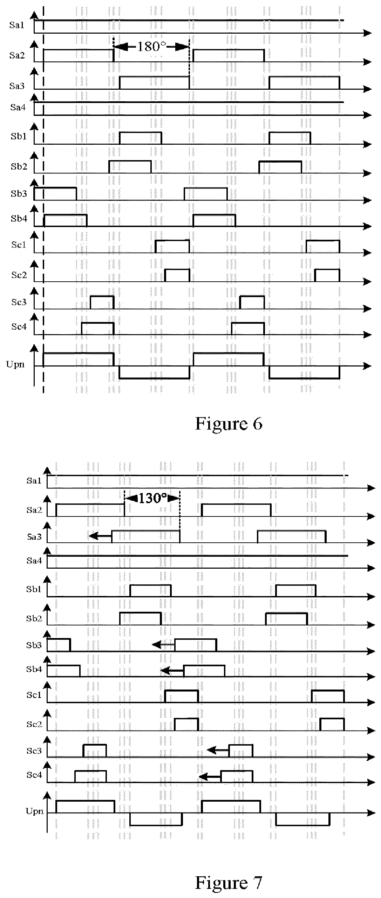

Exemplarily, when i1>i2, as shown in Figure 6, the rectification unit U1 has a control signal with an initial phase shift angle of 180°. When a three-phase input voltage is Ua>0, Ub<0, Uc<0 and |Ua|>|Ub|>|Uc|, the switches connected to a phase A can be configured to: Sa1 and Sa4 are normally on, Sa2 and Sa3 emit waves complementarily with a duty cycle of 50%, and the phase difference between the falling edges of Sa2 and Sa3 is 180°. At this time, according to the errors between si1 and i2, the phase shift angle of the rectification unit U1 is adjusted, so that the resonant tank voltage Upn of the rectification unit U1 produces a zero-level voltage, to reduce the energy transfer time from the rectification unit U1 to the secondary side of the transformer, to further reduce the current of the rectification unit U1, ultimately achieving the purpose of current sharing. After phase shifting, the control signal of the rectification unit U1 is as shown in Figure 7. In Figure 7, the target phase shift angle of the rectification unit U1 is 130°.

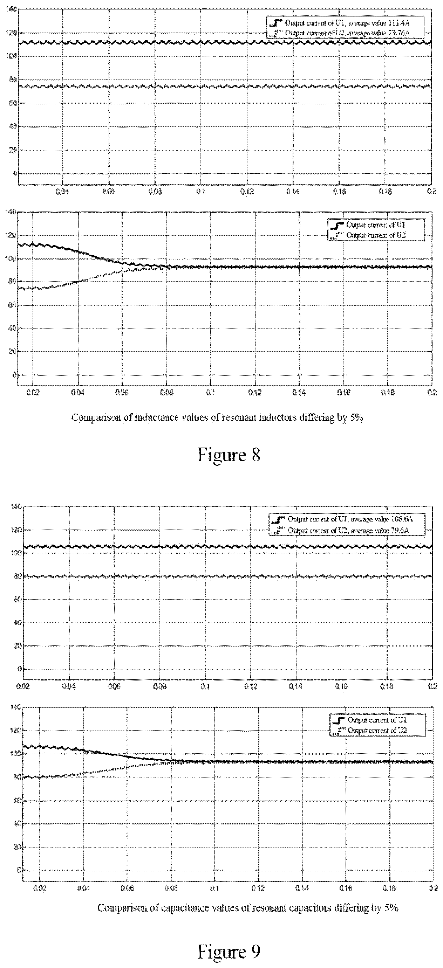

For the above-mentioned example with two rectification units, the following data can be obtained in practical operations: with respect to a rated three-phase input voltage of 380V, 50HZ, a rated output voltage of 270V and rated output power of 50KW, before using the phase-shifting current sharing control method provided in an embodiment of the present disclosures, when the accuracy of the inductance values of resonant inductance, the capacitance values of resonant capacitance, and the inductance values of excitation inductance of the rectification units U1 and U2 differ by 5% respectively, a non-current sharing effect will occur; after the method provided in the embodiment of the present disclosure is applied, a difference value between the output currents of the rectification unit U1 and the rectification unit U2 is gradually decreased until it stabilizes after implementing current sharing, as shown in the effect comparison diagrams of Figures 8-10 (in these schematic diagrams, since the output current of a rectification unit contains high-frequency switching ripples, in order to make it convenient to observe an average value thereof, instantaneous values of the output current of the rectification unit are sampled, and are then displayed after two-stage 100HZ low-pass filtering is performed).

Table 1 and Table 2 are determined based on the above-mentioned data. As can be known, the resonant inductor inductance has the greatest impact on a current un-equalizing degree, the resonant capacitor capacity has less impact thereon, and the excitation inductor inductance has the least impact thereon.

Table 1 Non-uniformity of Current Sharing without Current Sharing Control

| Comparison Items | Output current of rectification unit U1 (A) | Output current of rectification unit U2 (A) | Non-uniformity of current sharing |
|---|---|---|---|
| inductance values of resonant inductors differing by 5% | 111.4 | 73.76 | 20.33% |
| capacitance values of resonant capacitors differing by 5% | 105.6 | 79.6 | 14.04% |
| inductance values of excitation inductors differing by 5% | 89.86 | 95.32 | 2.95% |

By applying the current sharing control method of the present invention, non-uniformity of current sharing after applying current sharing adjustment can be as follows, wherein all of the non-uniformities of current are less than 2%.

Table 2 Non-uniformity of Current Sharing with Current Sharing Control

| Comparison Items | Output current of rectification unit U1 (A) | Output current of rectification unit U2 (A) | Non-uniformity of current sharing |
|---|---|---|---|
| inductance values of resonant inductors differing by 5% | 93.72 | 90.29 | 1.86% |
| capacitance values of resonant capacitors differing by 5% | 93.6 | 90.68 | 1.44% |
| inductance values of excitation inductors differing by 5% | 91.55 | 92.45 | 0.49% |

Wherein, the non-uniformity of current sharing can be calculated according to the following equation:

$$\text{Non-uniformity of Current Sharing} = \frac{|I_{max} - I_{avg}|}{I_{avg}} * 100\%$$

Wherein $I_{avg}$ is an average output current of each of the rectification units, and $I_{max}$ is an output current of a rectification unit with a largest deviation from $I_{avg}$.

In the method provided in the above-mentioned embodiment, the current sampling values of the at least two rectification units can be acquired; the target phase shift angle of each of the rectification units can be determined according to the current sampling values of the at least two rectification units, wherein the target phase shift angle is used to indicate a duration of an input voltage of the LLC resonant tank being in a zero-level state; according to the target phase shift angle of each of the rectification units, a control signal of a target switch in a bridge topology of each of the rectification units is controlled to perform phase shifting. Embodiments of the present disclosure adjust a phase shift angle of a switch in a rectification unit so that an input voltage of an LLC resonant tank is at a zero-level, thereby controlling an output current of each of the rectification units, so as to achieve an effect of current sharing of the outputs of multiple rectification units.

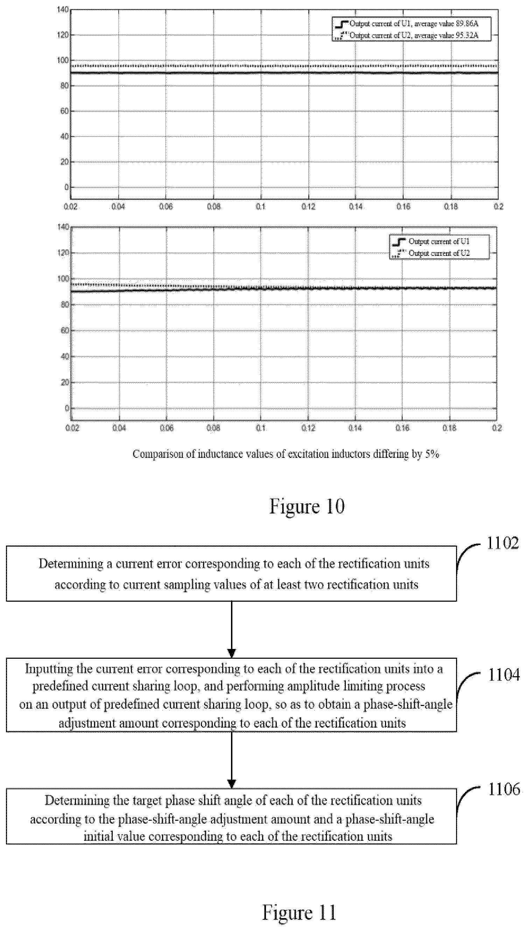

In one embodiment, as shown in Figure 11, a target phase shift angle of each of the rectification units can be determined according to the current sampling values of the at least two rectification units, comprising: step 1102: determining a current error corresponding to each of the rectification units according to the current sampling values of the at least two rectification units; step 1104: inputting the current error corresponding to each of the rectification units into a predefined current sharing loop, and performing an amplitude limiting process on an output of the predefined current sharing loop, to obtain a phase-shift-angle adjustment amount corresponding to each of the rectification units; step 1106: determining a target phase shift angle of each of the rectification units according to the phase-shift-angle adjustment amount and the phase-shift-angle initial value corresponding to each of the rectification units.

A current error refers to an error between a current sampling value and a specific current value, and a current error of each of the rectification units refers to an error between a current sampling value of the rectification unit and the same specific current value. The specific current value can be a current sampling value of any rectification unit of at least two rectification units, which can also be determined according to current sampling values of at least two rectification units, and can also be manually set based on an operating state of a converter.

By inputting the current error corresponding to each of the rectification units into a predefined current sharing loop, the phase-shift-angle adjustment amount corresponding to each of the rectification units may be obtained through the predefined current sharing loop calculation and amplitude limiting on an output of the current sharing loop, combined with the initial value of the phase-shift-angle, a target phase shift angle may be determined. Wherein, the number of the predefined current sharing loop may be at least one, and may be at most determined based on the number of the rectification units. When there is only one predefined current sharing loop, a current error of each of the rectification units may be sequentially input into the predefined current sharing loop to obtain a phase-shift-angle adjustment amount of each of the rectification units. When there are a plurality of predefined current sharing loops, for example, each of the rectification units corresponds to a predefined current sharing loop, a current error of each of the rectification units is input into a corresponding predefined current sharing loop to obtain a phase-shift-angle adjustment amount.

The predefined current sharing loop in the embodiment of the present disclosure can adopt an integral controller, and can also adopt a proportional integral controller or other general-purpose controllers. The predefined current sharing loop is characterized in that a phase-shift-angle adjustment amount can be calculated according to a current error. Exemplarily, the predefined current sharing loop adopts a PI (Proportional-Integral) controller.

In the method provided in the above-mentioned embodiment, by inputting a current error into a predefined current sharing loop, a phase-shift-angle adjustment amount of each of the rectification units can be obtained; and by performing adjustment according to the phase-shift-angle adjustment amount, an output current of each of the rectification units can be made to be close to a specific current value, so as to achieve an effect of current sharing.

In one embodiment, a current error corresponding to each of the rectification units can be determined according to the current sampling values of the at least two rectification units, comprising: comparing the current sampling values of the at least two rectification units to determine a minimum value of the current sampling values of the at least two rectification units; taking a difference value between a current sampling value of each of the rectification units and the minimum value as a current error corresponding to each of the rectification units.

According to the embodiment of the present disclosure, a minimum value of the current sampling values of the at least two rectification units can be used as a specific current value, and a current error measures a difference between a current sampling value of each of the rectification units and the minimum value. According to a target phase shift angle of each of the rectification units which is determined from the current error, an output current of each of the rectification units can be adjusted to a value close to the minimum value, while a rectification unit with the minimum value keeps an output current unchanged, which can achieve an effect of current sharing for all output currents of all rectification units.

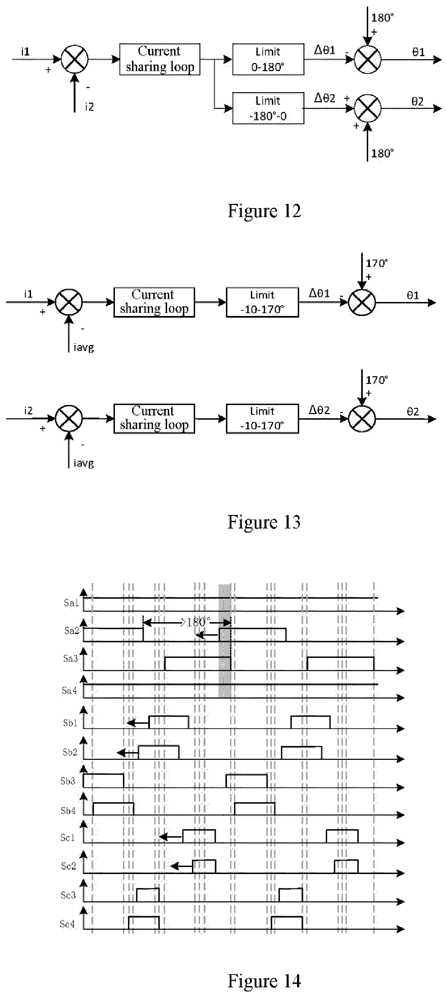

In combination with the definition of the current error provided in the embodiments of the present disclosure, by taking an AC-DC converter including both rectification units U1 and U2 whose phase-shift-angle initial values are both 180° as an example, a block diagram of the current sharing control method can be as shown in Figure 12. Wherein, i1 is a current sampling value of the rectification unit U1; i2 is a current sampling value of the rectification unit U2; $\Delta\theta1$ is a phase-shift-angle adjustment amount of a switch of the rectification unit U1; $\Delta\theta2$ is a phase-shift-angle adjustment amount of a switch of the rectification unit U2; $\theta1$ is a phase shift angle of a switch of the rectification unit U1; $\theta2$ is a phase shift angle of a switch of the rectification unit U2. The current sharing control method according to the present disclosure is as follows.

(1) According to a current sharing control method of present disclosure, when i1>i2, a current error value is positive; after integral calculation on the current sharing loop, an output is positive; after amplitude limiting, $\Delta\theta1>0$, $\Delta\theta2=0$. A target phase shift angle of the rectification unit U1 is less than 180°, and a target phase shift angle of the rectification unit U2 is 180°, and a three-phase lower switch of the rectification unit U1 is driven to shift the phase to the left, so that the input voltage Upn of the resonant tank of the rectification unit U1 produces a zero-level, thereby reducing the energy transfer time from the rectification unit U1 to transfer energy to the secondary side of the transformer, further reducing the current in the rectification unit U1, and finally achieving the purpose of current sharing.

(2) According to a current sharing control method of present disclosure, when i1<i2, a current error value is negative; after integral calculation on the current sharing loop, an output is negative; after amplitude limiting, $\Delta\theta2<0$, and $\Delta\theta1=0$. A target phase shift angle of the rectification unit U1 is 180°, and a target phase shift angle of the rectification unit U2 is less than 180°, and a three-phase lower switch of the rectification unit U2 is driven to shift the phase to the left, so that the input voltage Upn of the resonant tank of the rectification unit U2 produces a zero-level, thereby reducing the energy transfer time from the rectification unit U2 to the secondary side of the transformer, further reducing the current of the rectification unit U2, and finally achieving the purpose of current sharing.

In the method provided in the above-mentioned embodiment, by comparing the magnitude of current sampling values and inputting an error between the current sampling value of each of the rectification units and a minimum value into a current sharing loop, the output currents of all rectification units can be close to or be equal to the minimum value, thereby achieving an effect of output current sharing. When the number of the rectification units is smaller, only one predefined current sharing loop can be disposed, and the current sampling values can be directly input to improve the efficiency of current sharing control.

In one embodiment, the current error corresponding to each of the rectification units can be determined according to the current sampling values of the at least two rectification units, comprising: determining an average current value of the at least two rectification units according to the current sampling values of the at least two rectification units; taking a difference value between a current sampling value of each of the rectification units and the average current value as a current error corresponding to each of the rectification units.

In this embodiment, an average current value of the at least two rectification units may be used as a specific current value, and each of the rectification units may be adjusted, so that an output current of each of the rectification units after the adjustment may be close to the average current value. Wherein, an average value of the current sampling values of the at least two rectification units can be obtained by calculating the current sampling values of the at least two rectification units, which can also be obtained by sampling a total output current of the at least two rectification units and then determining from the total output current and the number of the rectification units.

By performing adjustment for all the rectification units and adjusting the current sampling values of each of the rectification units to be closer, since a phase shift angle has a certain range, the method of this embodiment can avoid occurrence of a situation where a difference value between a current sampling value of one of the rectification units and the specific current value is greater, resulting in the situation that the current sharing cannot be achieved or the current sharing effect is poor through the adjustment of the phase shift angle.

In combination with the definition of the current error provided in the embodiment of the present disclosure, by taking an AC-DC converter including both rectification units U1 and U2 whose phase-shift-angle initial values are both 170° as an example, a block diagram of the current sharing control method can be as shown in Figure 13. Wherein, i1 is a current sampling value of the rectification unit U1; i2 is a current sampling value of the rectification unit U2; iavg is an average of i1 and i2; $\Delta\theta1$ is a phase-shift-angle adjustment amount of a switch of the rectification unit U1; $\Delta\theta2$ is a phase-shift-angle adjustment amount of a switch of the rectification unit U2; $\theta1$ is a phase shift angle of a switch of the rectification unit U1; $\theta2$ is a phase shift angle of a switch of the rectification unit U2. The current sharing control method according to the present disclosure is as follows.

(1) According to a current sharing control method of present disclosure, when i1>i2: i1>iavg, a current error value is positive, after integral operation on the current sharing loop, an output is positive, after amplitude limiting, $\Delta\theta1>0$ a target phase shift angle of the rectification unit U1 becomes smaller, a duration during which Upn is at a zero-level becomes longer, and an output current of the rectification unit U1 decreases accordingly; i2<iavg, a current error value is negative, an output is negative after integral operation on the current sharing loop, $\Delta\theta2<0$ after amplitude limiting, a target phase shift angle of the rectification unit U2 becomes larger, a duration during which Upn is at a zero-level becomes shorter, and an output current of the rectification unit U2 increases accordingly.

(2) According to a current sharing control method of present disclosure, when i1<i2, the process is opposite to the above process.

It should be noted that, when the current average value is used to determine the current error, there must be some rectification units whose output currents need to be adjusted to be smaller, and some other rectification units whose output currents need to be adjusted to be larger. When a phase shift angle is adjusted to be larger, a maximum value of the target phase shift angle is 180°, and thus there may be a possibility that output currents of some rectification units can no longer be adjusted to be larger.

In the above-mentioned embodiment, the phase-shift-angle initial values involved are all determined relative to a previous switching cycle, and a phase shift angle before a current adjustment time is used as a phase-shift-angle initial value for this adjustment. Moreover, an amplitude limiting range of the amplitude limiting process corresponding to the corresponding phase-shift-angle adjustment amount for each of the rectification units is related to the phase-shift-angle initial value of each of the rectification units. As shown in Figure 12, a phase-shift-angle initial value is 180°, and an amplitude limiting range is 0-180°. As shown in Figure 13, a phase-shift-angle initial value is 170°, and an amplitude limiting range is -10-170°. As shown in Figure 14, phase-shift-angle initial values of both rectification units are both 180°, but an amplitude limiting range of one rectification unit is -10°-180°, and an amplitude limiting range of the other rectification unit is -180°-10°. The output of the predefined current sharing loop mentioned in the embodiment of the present disclosure is subjected to an appropriate amplitude limiting process configured for the rectification units, thereby outputting a phase-shift-angle adjustment amount of a corresponding rectification unit.

According to an embodiment of the present disclosure, controlling a control signal of a target switch in a bridge topology of each of the rectification units according to the target phase shift angle of each of the rectification units to shift the phase, comprising: according to the target phase shift angle of each of the rectification units, a control signal of an upper switch of each bridge arm in a bridge topology of each of the rectification units may be controlled to shift the phase to the left; or, according to the target phase shift angle of each of the rectification units, a control signal of an upper switch of each bridge arm in a bridge topology of each of the rectification units may be controlled to shift the phase to the right; or, controlling, according to the target phase shift angle of each of the rectification units, a control signal of a lower switch of each bridge arm in a bridge topology of each of the rectification units to shift the phase to the left; or, controlling, according to the target phase shift angle of each of the rectification units, a control signal of a lower switch of each bridge arm in a bridge topology of each of the rectification units to shift the phase to the right.

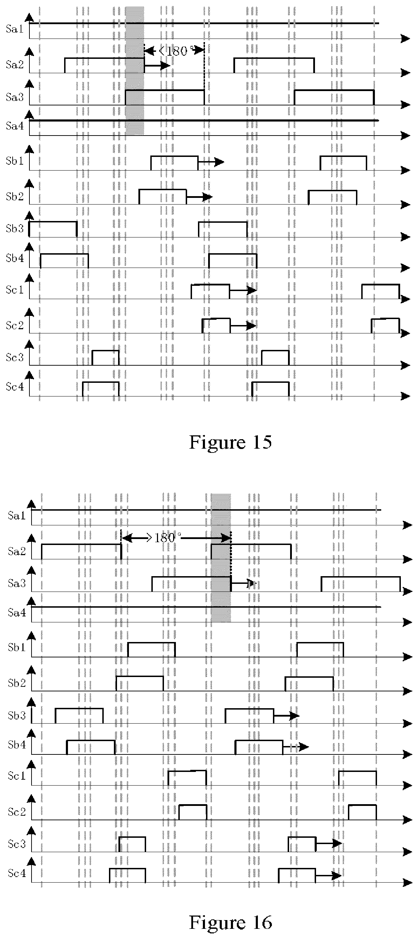

Since control signals of switches in a bridge topology type are periodic signals, phase shift angles of control signals between two switches are relative. Therefore, after a target phase shift angle is determined, there may be various phase shifting schemes to adjust the phase shift angles. For example, in the signal diagrams shown in Figures 6 and 7, Figure 7 adopts that a control signal of a lower switch of each bridge arm shifts a phase to the left to adjust a phase shift angle. Relative to the control signal of Figure 6, it is also possible to adopt a scheme in which a control signal of an upper switch of each bridge arm shifts a phase to the left as shown in Figure 14, a scheme in which a control signal of an upper switch of each bridge arm shifts a phase to the right as shown in Figure 15, and a scheme in which a control signal of a lower switch of each bridge arm shifts a phase to the right as shown in Figure 16.

In the method provided in the above-mentioned embodiment, various phase shifting manners are given, and a suitable phase shifting manner is selected in combination with a specific application scenario, which is more flexible.

It should be understood that, although the steps in the flowcharts of the foregoing embodiment are shown sequentially as indicated by the arrows, the steps are not necessarily performed in the order indicated by the arrows. Unless otherwise explicitly specified herein, there is no strict order restriction for the execution of these steps, and these steps can be executed in other orders. Moreover, at least a part of the steps in the flowcharts involved in the above embodiments may include multiple steps or multiple stages, and these steps or stages are not necessarily executed at the same time, but can be executed at different times. The execution order of these steps or stages is not necessarily sequential, but can be executed in turn or alternately with other steps or at least a part of the steps or stages in other steps.

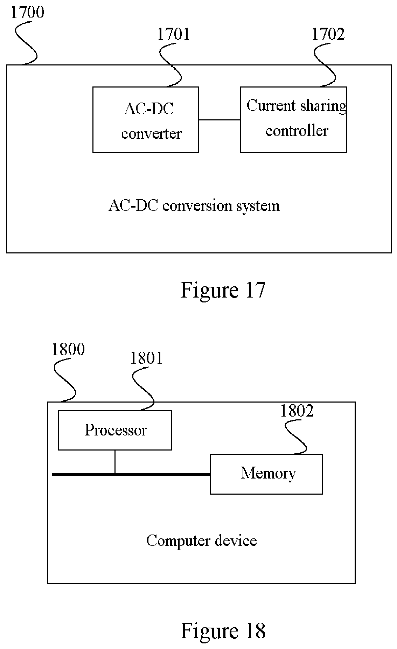

Based on the same inventive concept, an AC-DC conversion system is further provided in an embodiment of the present disclosure. As shown in Figure 17, the system 1700 comprises an AC-DC converter 1701 and a current sharing controller 1702. The AC-DC converter comprises at least two rectification units. Each of the at least two rectification units is in the form of a bridge topology combined with an LLC resonant tank.

The current sharing controller is configured to control an operating state of the AC-DC converter, and is specifically configured to perform the method in any of the above embodiments.

As shown in Figure 18, according to an embodiment of the present disclosure, a computer device 1800 is provided, and the computer device 1800 includes a memory 1801 and a processor 1802.

The memory 1801 is configured to store computer executable instructions executable by the processor.

The processor 1802, when executing the computer executable instructions, implements each step in the method in any of the above embodiments. For details, reference may be made to relevant descriptions in the foregoing method embodiments.

Alternatively, the memory 1801 may be either independent or integrated with the processor 1802. In a case where the memory 1801 is disposed independently, the computer device further comprises a bus for connecting the memory 1801 to the processor 1802.

A computer-readable storage medium is further provided in an embodiment of the present disclosure. The computer-readable storage medium has computer executable instructions stored thereon. The computer executable instructions, when executed by a processor, implement the various steps in the method as described in any of the above embodiments.

A computer program product is further provided in an embodiment of the present disclosure. The computer program product comprises computer executable instructions that, when executed by a processor, implement the method as described in any of the above embodiments.

Those of ordinary skills in the art may understand that all or part of the processes for implementing the above method embodiments may be completed by instructing relevant hardware through a computer program. The computer program may be stored in a non-volatile computer-readable storage medium. The computer executable instructions in the computer program, when executed, may comprise the processes in the embodiments of the method. Any reference to memory, database or other media in the embodiments provided in the present disclosure may comprise at least one of a non-volatile memory or a volatile memory. The non-volatile memory may comprise a read-only memory (ROM), a magnetic tape, a floppy disk, a flash memory, an optical memory, a high-density embedded non-volatile memory, a resistive memory (ReRAM), a Magnetoresistive Random Access Memory (MRAM), a Ferroelectric Random Access Memory (FRAM), a Phase Change Memory (PCM), a graphene memory, and the like. The volatile memory may comprise a random-access memory (RAM) or an external cache memory. As an illustration but not limitation, the RAM may be in various forms, such as a static random-access memory (SRAM) or dynamic random-access memory (DRAM). The database involved in embodiments of the present disclosure may comprise at least one of a relational database or a non-relational database. The non-relational database may comprise, but is not limited to, a distributed database based on block chains. The processor involved in the embodiments of the present disclosure may comprise, but is not limited to, a general-purpose processor, a central processor, a graphics processor, a digital signal processor, a programmable logic device, and a data processing logic device based on quantum computing.

The technical features of the above embodiments can be combined arbitrarily. In order to make the description concise, all possible combinations of the technical features in the above embodiments are not described. However, as long as there is no contradiction in the combination of these technical features, they should be considered as the scope of this specification.

The above embodiments present only some implementations of the present disclosure, which are described in detail but should not be construed as a limitation to a scope of the present disclosure. It should be noted that variations and improvements can be made by those skilled in the art without departing from the idea of the present disclosure. These variations and improvements fall within the protection scope of the present disclosure. Therefore, the protection scope of the present disclosure shall be in accordance with the appended claims.

**Claims**

1. A method for current sharing control, **characterized in that**, the method is applied to a current sharing controller, wherein the current sharing controller is configured to control an operating state of an AC-DC converter, and the AC-DC converter comprises at least two rectification units, each of the at least two rectification units is a bridge topology combined with an LLC resonant tank; and the method comprises:

acquiring current sampling values of the at least two rectification units;

determining a target phase shift angle for each of the at least two rectification units according to the current sampling values of the at least two rectification units, wherein the target phase shift angle is used to indicate a duration of an input voltage of the LLC resonant tank being in a zero-level state;

controlling, according to the target phase shift angle of each of the at least two rectification units, a control signal of a target switch in the bridge topology of each of the at least two rectification units to perform phase shifting.

2. The method according to claim 1, **characterized in that** determining a target phase shift angle of each of the at least two rectification units according to the current sampling values of the at least two rectification units comprises:

determining a current error corresponding to each of the at least two rectification units according to the current sampling values of the at least two rectification units;

inputting the current error corresponding to each of the at least two rectification units into a predefined current sharing loop, and performing an amplitude limiting process on an output of the predefined current sharing loop, so as to obtain a phase-shift-angle adjustment amount corresponding to each of the at least two rectification units;

determining the target phase shift angle of each of the at least two rectification units according to the phase-shift-angle adjustment amount and a phase-shift-angle initial value corresponding to each of the at least two rectification units.

3. The method according to claim 2, **characterized in that** determining a current error corresponding to each of the at least two rectification units according to the current sampling values of the at least two rectification units comprises:

comparing the current sampling values of the at least two rectification units to each other, to determine a minimum value of the current sampling values of the at least two rectification units;

taking a difference value between a current sampling value of each of the at least two rectification units and the minimum value as the current error corresponding to each of the at least two rectification units.

4. The method according to claim 2, **characterized in that** determining a current error corresponding to each of the at least two rectification units according to the current sampling values of the at least two rectification units comprises:

determining an average current value of the at least two rectification units according to the current sampling values of the at least two rectification units;

taking a difference value between a current sampling value of each of the at least two rectification units and the average current value as the current error corresponding to each of the at least two rectification units.

5. The method according to claim 2, **characterized in that** an amplitude limiting range of the amplitude limiting process corresponding to the corresponding phase-shift-angle adjustment amount for each of the at least two rectification units is related to the phase-shift-angle initial value of each of the at least two rectification units.

6. The method according to claim 1, **characterized in that** controlling, according to the target phase shift angle of each of the at least two rectification units, a control signal of a target switch in the bridge topology of each of the at least two rectification units to perform phase shifting comprises:

controlling, according to the target phase shift angle of each of the at least two rectification units, a control signal of an upper switch of each bridge arm in the bridge topology of each of the at least two rectification units to perform phase shifting to the left; or,

controlling, according to the target phase shift angle of each of the at least two rectification units, a control signal of an upper switch of each bridge arm in the bridge topology of each of the at least two rectification units to perform phase shifting to the right; or,

controlling, according to the target phase shift angle of each of the at least two rectification units, a control signal of a lower switch of each bridge arm in the bridge topology of each of the at least two rectification units to perform phase shifting to the left; or,

controlling, according to the target phase shift angle of each of the at least two rectification units, a control signal of a lower switch of each bridge arm in the bridge topology of each of the at least two rectification units to perform phase shifting to the right.

7. The method according to any one of claims 1 to 6, wherein the current sampling value comprises at least one of: a sampling value of an input current, a sampling value of a rectified output current, a sampling value of a resonant current, a sampling value of a switch current, and a sampling value of a secondary current of a transformer.

8. An AC-DC conversion system comprising an AC-DC converter and a current sharing controller, wherein the AC-DC converter comprises at least two rectification units, and each of the at least two rectification units is a bridge topology combined with an LLC resonant tank; and
the current sharing controller is configured to control an operating state of the AC-DC converter, and is specifically configured to perform the method according to any one of claims 1 to 7.

9. A computer device comprising a processor and a memory communicatively coupled to the processor; wherein

   the memory stores computer-executable instructions; and
   the processor is configured to execute the computer-executable instructions stored in the memory to implement the method according to any one of claims 1 to 7.

10. A computer-readable storage medium having computer executable instructions stored thereon, wherein the computer executable instructions, when executed by a processor, perform the method according to any one of claims 1 to 7.

11. A computer program product comprising computer-executable instructions, wherein the computer-executable instructions, when executed by a processor, perform the method according to any one of claims 1 to 7.

Figure 1

Figure 2

Acquiring current sampling values of at least two rectification units ⟋302

Determining target phase shift angle of each of the rectification units according to current sampling values of at least two rectification units, target phase shift angle being used to indicate duration of input voltage of LLC resonant tank being in zero-level state ⟋304

Controlling, according to target phase shift angle of each of the rectification units, control signal of target switch in bridge topology of each of the rectification units to perform phase shifting. ⟋306

Figure 3

Rectification unit

Figure 4

Figure 5

Figure 6

Figure 7

Comparison of inductance values of resonant inductors differing by 5%

Figure 8

Comparison of capacitance values of resonant capacitors differing by 5%

Figure 9

Comparison of inductance values of excitation inductors differing by 5%

Figure 10

```
Determining a current error corresponding to each of the rectification units
according to current sampling values of at least two rectification units          ⌐ 1102

                                        ↓

Inputting the current error corresponding to each of the rectification units into a
predefined current sharing loop, and performing amplitude limiting process          ⌐ 1104
on an output of predefined current sharing loop, so as to obtain a phase-shift-angle
adjustment amount corresponding to each of the rectification units

                                        ↓

Determining the target phase shift angle of each of the rectification units         ⌐ 1106
according to the phase-shift-angle adjustment amount and a phase-shift-angle
initial value corresponding to each of the rectification units
```

Figure 11

Figure 12

Figure 13

Figure 14

Figure 15

Figure 16

1700

1701

1702

AC-DC
converter

Current sharing
controller

AC-DC conversion system

Figure 17

1800

1801

1802

Processor

Memory

Computer device

Figure 18

| | Europäisches Patentamt / European Patent Office / Office européen des brevets | **EUROPEAN SEARCH REPORT** | **Application Number** |
|---|---|---|---|
| | | | EP 25 18 0169 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 021 527 B (UNIV NANJING AERONAUTICS & ASTRONAUTICS) 21 June 2024 (2024-06-21) * abstract * * paragraph [0001] - paragraph [0095]; claims 1-9; figures 1-12 * ----- | 1-11 | INV. H02M1/00 H02M1/088 H02M1/15 H02M1/42 H02M7/23 H02M5/293 |
| A | EP 1 640 850 A1 (ST MICROELECTRONICS SRL [IT]) 29 March 2006 (2006-03-29) * abstract * * paragraph [0001] - paragraph [0078]; figures 1-13 * ----- | 1-11 | |
| A | EP 2 993 774 A1 (AEG POWER SOLUTIONS GMBH [DE]) 9 March 2016 (2016-03-09) * abstract * * paragraph [0001] - paragraph [0058]; figures 1-14 * ----- | 1-11 | |

TECHNICAL FIELDS SEARCHED (IPC)

H02M

The present search report has been drawn up for all claims

| Place of search | Date of completion of the search | Examiner |
|---|---|---|
| The Hague | 16 November 2025 | Adami, Salah-Eddine |

EPO FORM 1503 03.82 (P04C01)

## ANNEX TO THE EUROPEAN SEARCH REPORT
## ON EUROPEAN PATENT APPLICATION NO.

EP 25 18 0169

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2025

| Patent document cited in search report | | Publication date | Patent family member(s) | | Publication date |
|---|---|---|---|---|---|
| CN 115021527 | B | 21-06-2024 | NONE | | |
| EP 1640850 | A1 | 29-03-2006 | EP | 1640850 A1 | 29-03-2006 |
| | | | US | 2006139976 A1 | 29-06-2006 |
| EP 2993774 | A1 | 09-03-2016 | NONE | | |

EPO FORM P0459

For more details about this annex : see Official Journal of the European Patent Office, No. 12/82

**EP 4 716 081 A1**

**REFERENCES CITED IN THE DESCRIPTION**

**Patent documents cited in the description**

- CN 202411323283